**Europäisches Patentamt**

**European Patent Office**

**Office européen des brevets**

(19)

(11) Veröffentlichungsnummer : **0 069 933**
**B1**

(12) **EUROPÄISCHE PATENTSCHRIFT**

(45) Veröffentlichungstag der Patentschrift :
02.01.86

(21) Anmeldenummer : **82105909.4**

(22) Anmeldetag : **02.07.82**

(51) Int. Cl.⁴ : **H 02 K   1/12**

(54) **Stator für Kugelmotoren.**

(30) Priorität : **17.07.81 DE 3128304**

(43) Veröffentlichungstag der Anmeldung :
**19.01.83 Patentblatt 83/03**

(45) Bekanntmachung des Hinweises auf die Patenterteilung : **02.01.86 Patentblatt 86/01**

(84) Benannte Vertragsstaaten :
**FR GB IT**

(56) Entgegenhaltungen :
**CH-A-   211 546**
**DE-A- 2 151 598**
**DE-A- 2 623 438**
**DE-C-   889 935**
**US-A- 2 490 021**
**US-A- 2 734 140**
**US-A- 3 581 132**

(73) Patentinhaber : **Laing, Karsten**
**Kaiserallee 51**
**D-7500 Karlsruhe (DE)**

(72) Erfinder : **Laing, Karsten**
**Kaiserallee 51**
**D-7500 Karlsruhe (DE)**

Jouve, 18, rue St-Denis, 75001 Paris, France

## Beschreibung

Die Erfindung betrifft einen Stator für Kugelmotoren, dessen Zähne aus Blechstreifen bestehen.

Kugelmotoren sind durch magnetische Fixierung und Stabilisierung des Läufers gekennzeichnet und gewinnen zunehmend an Bedeutung. Die Zähne des Motors sind durch Blechstreifen gebildet, die entweder radial gestellt sind, also dreieckige Lufträume zwischen sich einschliessen, und auf der Oberfläche des sphärischen Luftspaltes enden, also entsprechende Formgebung erfordern oder sie bilden Vorsprünge eines spiralig gewickelten Wendels aus Blech, die sich in Umfangsrichtung erstrecken. Beide Ausführungsformen erfordern komplizierte Stanzwerkzeuge. Spiralwendelförmig gewickelte Ausführungsformen machen ausserdem ein Konturenbeschleifen der Enden der Vorsprünge zum Luftspalt hin erforderlich. Beide Ausführungsformen haben etwa 40 % Blechverschnitt.

Der Erfindung liegt die Aufgabe zugrunde, einen Stator mit Zähnen zu schaffen, dem diese Nachteile nicht anhaften. Diese Aufgabe wird durch die Maßnahmen nach dem Patentanspruch 1 gelöst. Dadurch, daß die Zähne auf gedachten Kreiszylindermänteln oder auf den Mantelflächen eines Körpers mit Polygonquerschnitt, verlaufen, kann der magnetische Rückschluss über Scheiben erfolgen, die getreppte Ausnehmungen aufweisen und dadurch einen kontinuierlichen magnetischen Übergang der Blechstreifen unterschiedlicher azimutaler Erstreckung und Länge zum magnetischen Luftspalt hin schaffen.

Rechteckige, durch abfalloses Scheren von Endlosband hergestellte Blechstreifen mit unterschiedlichen Breiten und Längen werden zu Zähnen zusammengefasst und an einem Ende durch Blechscheiben mit getreppten Ausnehmungen miteinander verbunden. Sie enden am anderen Ende nahe der Oberfläche des sphärischen Magnetspaltes. Zur Anpassung an die sphärische Form können die Blechteile durch Walzen hergestellte Abschrägungen aufweisen oder aber auf getreppt ausgebildeten Polschuhen enden.

Die Erfindung soll anhand von Figuren beschrieben werden.

Figur 1 zeigt eine Ausführungsform mit getreppten Ausnehmungen und Polschuhen.

Figur 2 und 3 zeigen Rückschlusselemente mit abnehmendem Durchmesser.

Figur 4 zeigt einen Ring, der Polschuhe bildet.

Figur 5 zeigt eine polschuhfreie Ausbildung.

Figur 6 zeigt ein Walzprofil für polschuhfreie Ausführungen.

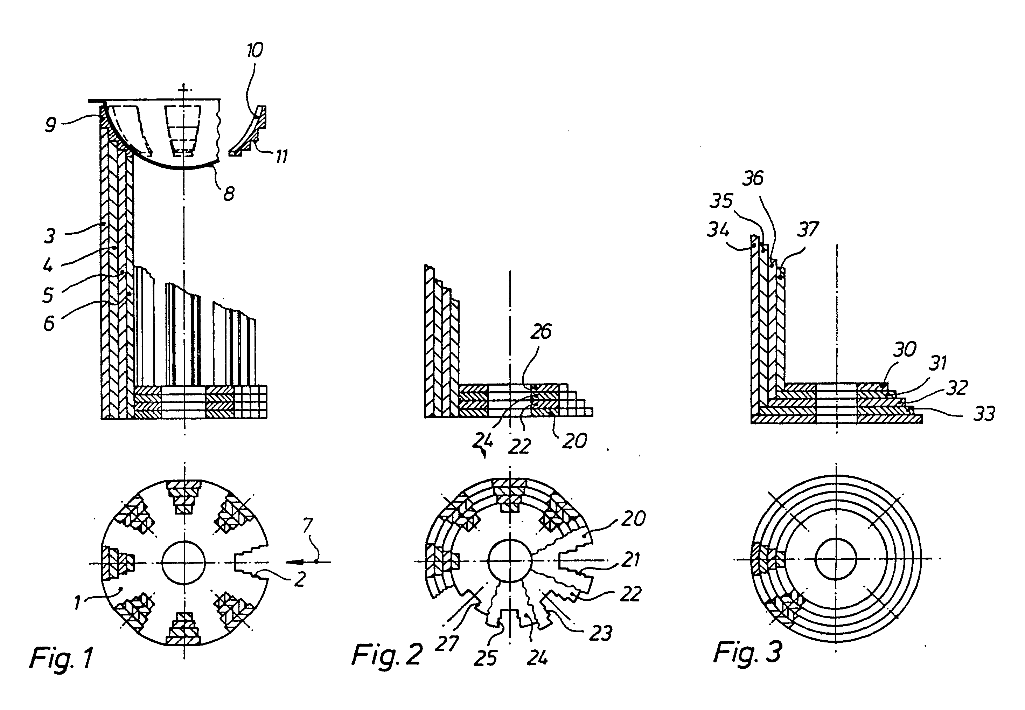

Figur 1 zeigt Draufsicht und Längsschnitt eines erfindungsgemässen Stators. Die Rückschlussbleche 1 weisen getreppte Ausnehmungen 2 auf, in welche die Bleche 3, 4, 5 und 6 entsprechend der Pfeilrichtung 7 eingepresst sind. Zur Trennkalotte 8 hin erfolgt die Begrenzung durch einen Polschuh 9 aus Weicheisen, dessen Konkav-Fläche 10 der Kalotte 8 folgt, während die konvexe Oberfläche 11 getreppt ausgebildet ist.

Figur 2 zeigt eine andere Form der Rückschlussbleche, die abnehmende Durchmesser aufweisen, so dass das Rückschlussblech 20, welches auch aus einer Mehrzahl dünnerer Bleche bestehen kann, 4 Treppenstufen 21 aufweist, während das Rückschlussblech 22 nur noch 3 Treppenstufen und das Rückschlussblech 24 nur noch 2 Treppenstufen 25 aufweist.

Figur 3 zeigt eine ähnliche Anordnung, bei der die Rückschlussbleche 30, 31, 32 und 33 kreiszylindrisch ausgebildet sind, während die Zähne 34, 35, 36 und 37 in ihrer Breitenerstreckung so gebogen sind, dass sie der Kontur der Rückschlussscheiben 30, 31, 32 und 33 folgen.

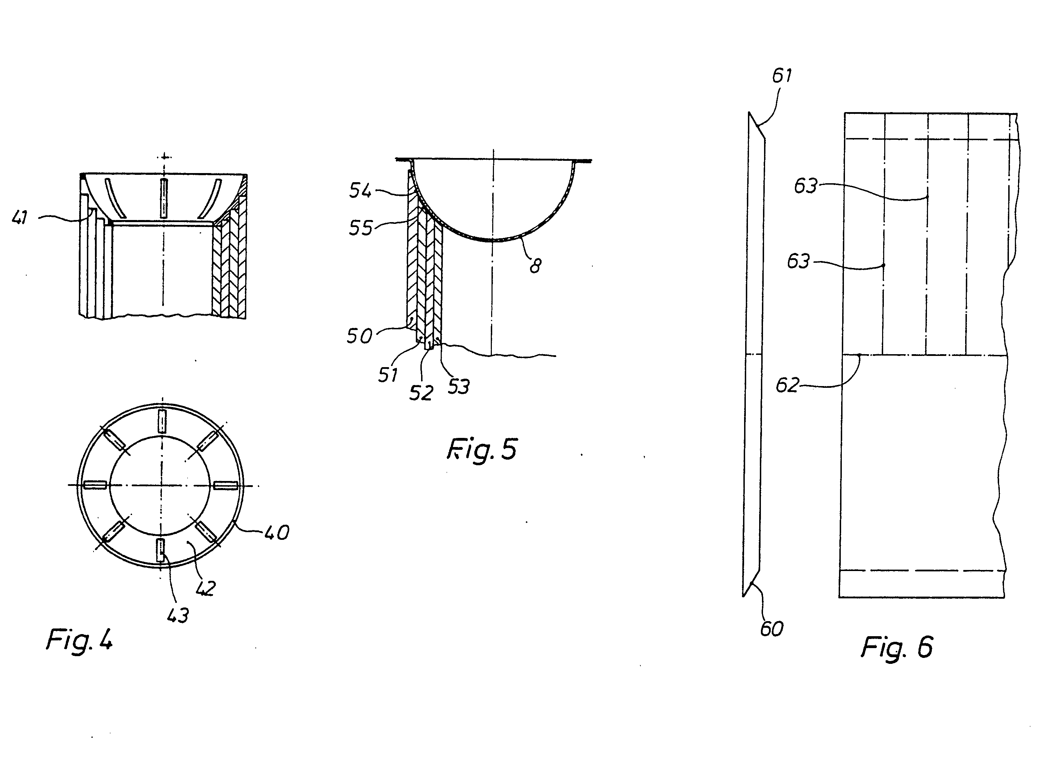

Figur 4 zeigt ein Polschuhelement, bei dem alle Polschuhe aus einem Ring 40 geformt sind, in welchem auf der konvexen Seite Treppen 41 z. B. durch Drehen angeordnet sind, wobei die Pole 42 durch Radialschlitze 43 voneinander getrennt sind.

Figur 5 zeigt eine Ausbildung, bei der die Blechstreifen 50, 51, 52 und 53 an ihren der Kalotte 8 zugewandten Enden Schrägen aufweisen, die der Kontur der Kalotte weitgehend folgen. Diese Schrägen 54 und 55 können durch ein schräges Abscheren erzeugt werden, sie können jedoch auch durch Walzen hergestellt werden, wobei dann die schrägen Flächen im Querschnitt auf Kreisbögen verlaufen.

Figur 6 zeigt einen Blechstreifen in übertrieben dargestellter Dicke, bei dem die Schrägen 60 und 61 durch Walzen erzeugt sind. Durch Trennung längs der Trennlinie 62 entstehen zwei Streifen, die anschliessend längs den Markierungen 63 zu Zähnen zerschnitten werden.

## Patentansprüche

1. Stator für Kugelmotoren mit Blechpaketzähnen, die zwischen den gedachten Mantelflächen zweier koaxialer Zylinder oder den gedachten Umfangsflächen zweier koaxialer Körper mit Polygon-Querschnitt verlaufen und an ihrem einen Ende mit dem Rotor des Motors einen sphärischen Luftspalt bilden, dadurch gekennzeichnet, dass die Blechpaketzähne aus rechteckigen Blechstreifen (3, 4, 5, 6) gebildet werden, die parallel zu den Mantel- bzw. Umfangsflächen verlaufen und deren Längen und Breiten von aussen nach innen gesehen abnehmen.

2. Stator nach Anspruch 1, dadurch gekennzeichnet, dass die dem sphärischen Luftspalt oder der Kalotte (8) zugewandten Enden der Blechstreifen durch Polschuhe (9) fortgesetzt werden, die den Blechstreifenenden zugewandte, in versetzten Rotationsebenen verlaufende Ringbereiche (41) aufweisen.

3. Stator nach Anspruch 2, dadurch gekennzeichnet, dass die Polschuhe (42) einen Ring (40) bilden und lediglich durch Schlitze (43) voneinander getrennt sind.

4. Stator nach Anspruch 1, dadurch gekennzeichnet, dass die dem sphärischen Luftspalt zugewandten Enden der Bleche (50-53) entsprechend der Kontur des sphärischen Luftspaltes abgeschrägt sind.

5. Stator nach Anspruch 4, dadurch gekennzeichnet, dass die Erzeugung der Schräge (54) durch Walzen von Blechbändern an den Enden (60, 61) erfolgt.

6. Stator nach Anspruch 1, dadurch gekennzeichnet, dass die Zähne an dem dem Luftspalt abgewandten Ende in treppenförmigen Ausnehmungen (2) von Rückschlussblechen (1) an drei Seiten berührt werden.

7. Stator nach Anspruch 6, dadurch gekennzeichnet, dass die dem Luftspalt zugewandten Rückschlussbleche (26) einen kleineren Durchmesser haben als die dem Luftspalt abgewandten (20).

8. Stator nach Anspruch 1 und 7, dadurch gekennzeichnet, dass die Zähne (34, 35 und 36) in ihrer Breitenerstreckung eine leichte Durchbiegung aufweisen und der Kontur der Rückschlussbleche (30-33) folgen.

## Claims

1. Stator for spherical motors with core teeth which extend between the imaginary lateral surfaces of two coaxial cylinders or the imaginary circumferential surfaces of two coaxial bodies of polygonal cross section and form at one of their ends a spherical air gap with the rotor of the motor, wherein the core teeth are formed of rectangular sheet metal strips (3, 4, 5, 6) which extend parallel to the lateral or circumferential surfaces and whose lengths and widths decrease as viewed from outside to inside.

2. Stator as defined in claim 1, wherein the ends of the sheet metal strips facing the spherical air gap or the dome (8) are continued by pole shoes (9) which exhibit annular areas (41) extending in staggered rotational planes and facing the ends of the sheet metal strips.

3. Stator as defined in claim 2, wherein the pole shoes (42) form a ring (40) and are separated from each other merely by slots (43).

4. Stator as defined in claim 1, wherein the ends of the laminations (50-53) facing the spherical air gap are bevelled according to the contour of the spherical air gap.

5. Stator as defined in claim 4, wherein the bevel (54) is produced by rolling sheet metal strips at the ends (60, 61).

6. Stator as defined in claim 1, wherein at the end facing away from the air gap the teeth are touched on three sides in step-likes recesses (2) by return laminations (1).

7. Stator as defined in claim 6, wherein the return laminations (26) facing the air gap have a smaller diameter than those facing away from the air gap (20).

8. Stator as defined in claims 1 and 7, wherein the teeth (34, 35 and 36) exhibit a slight deflection over their width and follow the contour of the return laminations (30-33).

## Revendications

1. Stator de moteur sphérique à dents feuilletées qui se trouvent entre les surfaces de l'enveloppe de deux cylindres coaxiaux ou des circonférences de deux corps coaxiaux à coupe polygonale et qui forment à l'une de leur extrémité un entrefer sphérique avec le rotor du moteur, caractérisé par le fait que les dents feuilletées sont formées de rubans de tôle rectangulaires (3, 4, 5, 6) qui sont disposées parallèlement aux surfaces de l'enveloppe ou aux circonférences et dont les longueurs et largeurs vont en décroissant de l'extérieur vers l'intérieur.

2. Stator selon la revendication 1, caractérisé par le fait que les extrémités des rubans de tôle orientées vers l'entrefer sphérique ou la calotte (8) sont prolongées par des pièces polaires (9) qui présentent des espaces circulaires (41) orientés vers les extrémités des rubans de tôle et dont les plans de rotation sont décalés.

3. Stator selon la revendication 2, caractérisé par le fait que les pièces polaires (42) forment un anneau (40) et sont seulement séparées les unes des autres par des fentes (43).

4. Stator suivant la revendication 1, caractérisé par le fait que les extrémités des tôles (50-53) orientées vers l'entrefer sphérique sont biseautées suivant le contour de l'entrefer sphérique.

5. Stator suivant la revendication 4, caractérisé par le fait que le biseau (54) est formé par laminage des extrémités (60, 61) des bandes de tôle.

6. Stator suivant la revendication 1, caractérisé par le fait que les dents à l'extrémité qui n'est pas orientée par l'entrefer sont en contact dans les évidements en forme de gradins (2) avec des tôles en fer magnétique (1) sur trois côtés.

7. Stator suivant la revendication 6, caractérisé par le fait que les tôles en fer magnétique (26) orientées vers l'entrefer présentent un diamètre inférieur à celles qui ne sont pas orientées vers l'entrefer (20).

8. Stator suivant les revendications 1 et 7, caractérisé par le fait que les dents (34, 35 et 36) présentent une légère courbure dans le sens de la largeur et suivent le contour des tôles en fer magnétique (30-33).

Fig. 1

Fig. 2

Fig. 3

0 069 933

0 069 933

41

40

42

43

**Fig. 4**

54
55
50
51
52
53

8

**Fig. 5**

61

63

63

62

60

**Fig. 6**